(19) Europäisches Patentamt

European Patent Office

Office européen des brevets

(11) **EP 0 939 563 B1**

(12) **EUROPÄISCHE PATENTSCHRIFT**

(45) Veröffentlichungstag und Bekanntmachung des Hinweises auf die Patenterteilung:
**26.07.2006 Patentblatt 2006/30**

(51) Int Cl.:
*H04Q 7/28* (2006.01)    *H04B 7/26* (2006.01)

(21) Anmeldenummer: **98121402.6**

(22) Anmeldetag: **11.11.1998**

(54) **Verfahren und Funkstation zur Datenübertragung in einem Kommunikationssystem**

Method and radio station for data transmission in a communications system

Procédé et station radio pour la transmission de données dans un système de communications

(84) Benannte Vertragsstaaten:
**DE ES FR GB IT**

(30) Priorität: **03.12.1997 DE 19753697**

(43) Veröffentlichungstag der Anmeldung:
**01.09.1999 Patentblatt 1999/35**

(73) Patentinhaber: **SIEMENS AKTIENGESELLSCHAFT**
**80333 München (DE)**

(72) Erfinder: **Menzel, Christian Dr.**
**82216 Maisach (DE)**

(56) Entgegenhaltungen:
**US-A- 5 555 447**

- **GERSHO A ET AL: "VARIABLE RATE SPEECH CODING FOR CELLULAR NETWORKS" US, BOSTON, KLUWER, 1993, Seiten 77-84, XP000470427**

**Beschreibung**

Die Erfindung betrifft ein Verfahren und eine Funkstation zur Datenübertragung in einem Kommunikationssystem, insbesondere in Mobilfunksystemen mit Paketdatenübertragung.

Zur Übertragung von Daten zwischen zwei Kommunikationsendgeräten kann auf verbindungsorientierte Konzepte und Konzepte auf der Basis logischer Verbindungen zurückgegriffen werden. Bei verbindungsorientierten Datenübertragungen müssen während der gesamten Zeit der Datenübertragung physikalische Ressourcen zwischen den zwei Kommunikationsendgeräten bereitgestellt werden.

Bei der Datenübertragung über logische Verbindungen ist eine dauerhafte Bereitstellung von physikalischen Ressourcen nicht nötig. Ein Beispiel für eine solche Datenübertragung ist die Paketdatenübertragung. Hier besteht während der Dauer der gesamten Datenübertragung eine logische Verbindung zwischen den zwei Kommunikationsendgeräten, jedoch werden physikalische Ressourcen nur während der eigentlichen Übertragungszeiten bereitgestellt. Dieses Verfahren basiert darauf, daß die Daten in kurzen Datenpaketen, zwischen denen längere Pausen auftreten können, übermittelt werden. In den Pausen zwischen den Datenpaketen sind die physikalischen Ressourcen für andere logische Verbindungen verfügbar. Über einen Nachrichtenkanal werden somit Daten von zumindest zwei Verbindungen übertragen. Beide Verbindungen nutzen eine gemeinsame physikalische Ressource.

Das aus der deutschen Patentschrift DE 44 02 930 A1 bekannte Paketdatenübertragungsverfahren bietet sich insbesondere für Kommunikationssysteme mit begrenzten physikalischen Ressourcen an. Beispielsweise in Mobilfunksystemen, wie dem GSM-Mobilfunksystem (Global System for Mobile Communications), sind die physikalischen Ressourcen im Frequenzbereich - Anzahl der Frequenzkanäle und Zeitschlitze - beschränkt und müssen rationell genutzt werden.

Das GSM-Mobilfunksystem ist ein Beispiel für ein Zeitmultiplex-Mobilfunksystem, wobei Zeitschlitze innerhalb eines Frequenzkanals auf verschiedene Kommunikationsendgeräte aufgeteilt werden können. Die netzseitige Funkstation eines Mobilfunknetzes ist eine Basisstation, die über eine Funkschnittstelle mit Mobilstationen kommuniziert. Die Übertragung von einer mobilen Funkstation, d/.h. einer Mobilstation zur Basisstation wird als Aufwärtsrichtung, die Übertragung von der Basisstation zu einer Mobilstation als Abwärtsrichtung bezeichnet. Ein Nachrichtenkanal, der für die Datenübertragung reserviert ist, wird durch zumindest einen Zeitschlitz pro Zeitmultiplex-Rahmen gebildet. Mehrere Zeitmultiplex-Rahmen bilden einen Makrorahmen. Weiterhin bezeichnen die Trägerfrequenz und eventuell eine Frequenzsprungsequenz den Nachrichtenkanal.

Das GSM-Mobilfunksystem wurde ursprünglich zur Übertragung von Sprache konzipiert, wobei ein Nachrichtenkanal für die ständige Informationsübertragung zwischen Mobilstation und Basisstation reserviert wurde. Bei der Paketdatenübertragung wird jedoch ein gemeinsamer Nachrichtenkanal zur Paketdatenübertragung von und zu mehreren Mobilstationen genutzt.

Um die funktechnischen Ressourcen, d.h. den Nachrichtenkanal, einer Verbindung zuzuordnen, ist jedoch eine gewisse Wartezeit unumgänglich, die bei zeitkritischen zu übertragenden Daten zum sogenannten "clipping effect" führen. Bis der Nachrichtenkanal für ein Senden bereitsteht, geht Information verloren, die nicht zum Empfänger übertragen werden kann. Dauert z.B. beim GPRS (general packet radio services) des GSM-Mobilfunksystems die Zuteilung des Nachrichtenkanals in Aufwärtsrichtung ca. 100 ms, dann wirkt sich dieser Effekt bei der Sprachübertragung sehr nachteilig auf die beim Empfänger wahrgenommene Sprachqualität aus.

Aus der US 5,555,447 A ist ein Verfahren bekannt, das einen Verlust von Sprachdaten während des Aufbaus eines Kommunicationskanals vermeidet. Dabei wird nach Anforderung des Kanals vorliegende Sprache im Zeitmaßstab Komprimiert und gespeichert. Nach Aufbau des Kanals wird zunächst die Komprimierte und anschließend unkomprimierte Sprache auf dem Kanal übertragen.

Der Erfindung liegt folglich die Aufgabe zugrunde, ein verbessertes Verfahren und eine verbesserte Funkstation zur Datenübertragung in einem Kommunikationssystem anzugeben, die die Qualitätseinbußen verringern. Diese Aufgabe wird durch das Verfahren mit den Merkmalen des Patentanspruchs 1 und durch die Funkstation mit den Merkmalen des Patentanspruchs 11 gelöst. Vorteilhafte Weiterbildungen der Erfindung sind den Unteransprüchen zu entnehmen.

Erfindungsgemäß werden beim Verfahren zur Datenübertragung in einem Nachrichtenkanal eines Kommunikationssystems Daten von zumindest zwei Verbindungen übertragen. Für eine erste der zumindest zwei Verbindungen fallen die zu übertragenen Daten diskontinuierlich an. Sendeseitig wird ein Vorliegen von zu übertragenen Daten detektiert. Es wird eine Komprimierung von zu übertragenen Daten gemäß den Merkmalen der unabhängigen Patentansprüche 1 und 11 durchgeführt, so daß nach Vorliegen der Sendeerlaubnis die komprimierten Daten gesendet werden.

Durch die Komprimierung von zumindest Teilen der zu übertragenen Daten wird der Anteil der Daten, der durch ein verspätetes Vorliegen der Sendeerlaubnis verloren geht, verringert. Die erfindungsgemäße Komprimierung wird dabei ggf. zusätzlich zu weiteren Komprimierungen eingesetzt. Auch das gezielte Auswählen einzelner, üblicherweise nicht zusammenhängender Werte (Punktierung), die anschließend nicht übertragen werden, stellt eine Komprimierung ohne wesentlichen Informationsverlust dar.

Bei einer Datenübertragung, bei der der Sender eine Sendeerlaubnis des Empfängers oder anderer Einrichtungen benötigt, ist es erfindungsgemäß vorgesehen, daß mittels Signalisierungsmeldungen eine Anforderung zur Sendeerlaubnis gesendet wird und die Sendeerlaubnis empfangen wird. Dadurch entsteht eine Verzögerung bei der Datenübertragung, deren Einfluß mit der Komprimierung abgeschwächt wird..

Besonders vorteilhaft wirkt das erfindungsgemäße Verfahren für zu übertragende Daten, die Echtzeitinformationen sind. So sind beispielsweise Sprachinformationen, deren Vorliegen durch einen Sprachaktivitätsdetektor festgestellt wird, oder Bildinformationen zeitkritisch, da beim Empfänger fehlende zusammenhängende Informationen die Qualität der Wahrnehmung der Daten wesentlich beeinträchtigt.

Nach einer vorteilhaften Weiterbildung der Erfindung wird ein Komprimierungsfaktor für die Komprimierung der zu übertragenden Daten abhängig von einer Verzögerung zwischen Anforderung zur Sendeerlaubnis und Erhalt der Sendeerlaubnis eingestellt. Bei einer längeren Verzögerung ist die Komprimierung größer als bei einer kürzeren Verzögung. Der die Komprimierung angebende Komprimierungsfaktor ist dabei ein Wert, auf den die zu übertragenden Daten zu komprimieren sind, d.h. 0,7 bedeutet statt 10 bit werden 7 bit übertragen.

Es kann dabei vorgesehen sein, daß ein Komprimierungsfaktor über den Zeitraum der Komprimierung verändert wird. Beispielsweise wird dies durch eine stärkere Komprimierung zu Beginn als am Ende des Zeitraums erreicht, so daß ein Übergang zwischen komprimierten und unkomprimierten Teil bei der Übertragung geschaffen wird. Eine Weiterbildung der Erfindung sieht vor, daß ein Teil der anfallenden Daten nicht übertragen, sondern abgeschnitten wird. Bei sehr kurzen nicht übertragenen Datenteilen, z.B. der Länge kleiner 30 ms bei Sprachübertragung, ist die Qualität wenig beeinträchtigt, so daß eine Kombination aus Abschneiden und Komprimieren gewählt werden kann.

Weiterhin ist es vorteilhaft, das Senden auch nach Beendigung des sendeseitigen Anfalls der zu übertragenden Daten fortzusetzen. Die Übertragung ist damit zeitlich etwas verzögert.

Dadurch kann der Komprimierungsfaktor etwas vergrößert werden und/oder das Abschneiden wird reduziert. Da bei sehr kurzen Sprachproben die verfügbare ilbertragungszeit evtl. nicht ausreicht, wird damit ein starkes Verzerren der übertragenen Daten vermieden. Der Komprimierungsfaktor für die Komprimierung der zu übertragenden Daten wird vorteilhafterweise im Bereich von 7/10 bis 9999/10000 gewählt. Im Gegensatz zu anderen Komprimierungsverfahren kommt es nicht auf eine maximale Komprimierung, sondern darauf an, die im Vergleich zur Gesamtübertragungszeit geringen Anfangsverzögerungen zu überbrücken.

Eine wesentliche Anwendung der Erfindung ist die Paketdatenübertragung in einem Funk-Kommunikationssystem, bei dem die Ressourcenzuteilung regelmäßig Verzögerungen mit sich bringt. Durch das erfindungsgemäße Verfahren wird es damit möglich, auch über ein Paketdatenverfahren Echtzeitinformationen zu übertragen, obwohl dieses Verfahren ursprünglich für nichtzeitkritische Daten konzipiert wurde. Besondere Verzögerungen bei der Ressourcenzuteilung treten bei der Aufwärtsrichtung auf. Vorteilhafterweise erfolgt daher die erfindungsgemäß ausgeprägte Paketdatenübertragung von einer Mobilstation zu einer Basisstation. Hierbei ist die Qualitätsverbesserung besonders groß. Da sich die Mobilstationen, d.h. die Sender für die erste und weitere Verbindung, untereinander nicht koordinieren können, sind Verzögerungen nicht vermeidbar. Zudem kann die Übertragung in Abwärtsrichtung völlig unabhängig davon eingerichtet sein.

Das erfindungsgemäße Verfahren kann Anwendung in einem Zeitmultiplex-Mobilfunksystem, z.B. dem GSM-Mobilfunksystem, oder einem Mobilfunksystem der 3. Generation finden. Auch die Übertragung von ATM-Zellen ist eine paketvermittelte Übertragung, bei der die Erfindung die Nachteile des "clipping effects" zu verringern hilft.

Nach einer weiteren vorteilhaften Ausprägung der Erfindung werden Vereinbarungen über einen Komprimierungsfaktor für die Komprimierung der zu übertragenden Daten als Systemparameter vor einem Verbindungsaufbau festgelegt. Damit ist kein zusätzlicher Signalisierungsaufwand während der Verbindung nötig. Unterscheiden sich jedoch die Verzögerungen stark, oder ist durch eine unterschiedliche Auslastung des Nachrichtenkanals eine veränderte Verzögerung wahrscheinlich, dann können die Festlegungen bezüglich der Komprimierung auch verändert werden.

Ein besonderer Vorzug des erfindungsgemäßen Verfahrens besteht darin, daß beispielsweise eine Komprimierung durch Punktierung empfangsseitig keine Dekomprimierung benötigt. Hierbei wird durch besseres Verteilen der nicht übertragenen Daten die Qualität der Übertragung wesentlich verbessert, unabhängig davon, ob empfangsseitig eine Dekomprimierung durchgeführt wird.

Die Erfindung wird nachfolgend bezugnehmend auf zeichnerische Darstellungen anhand von Ausführungsbeispielen näher erläutert.

**Dabei zeigen**

FIG 1 ein Blockschaltbild eines Zeitmultiplex-Mobilfunksystems zur Paketdatenübertragung,

FIG 2 einen Frequenzkanal mit Zeitmultiplex,

FIG 3 ein Blockschaltbild einer Funkstation,

FIG 4 den Signalisierungsablauf für die Datenübertragung,

FIG 5 die Auswirkung des "clipping effects",

FIG 6 die Datenübertragung mit Komprimierung,

FIG 7 die Datenübertragung mit teilweiser Komprimierung,

FIG 8 die Datenübertragung mit Komprimierung und Abschneiden, und

FIG 9 die Datenübertragung mit Komprimierung und verlängertem Senden.

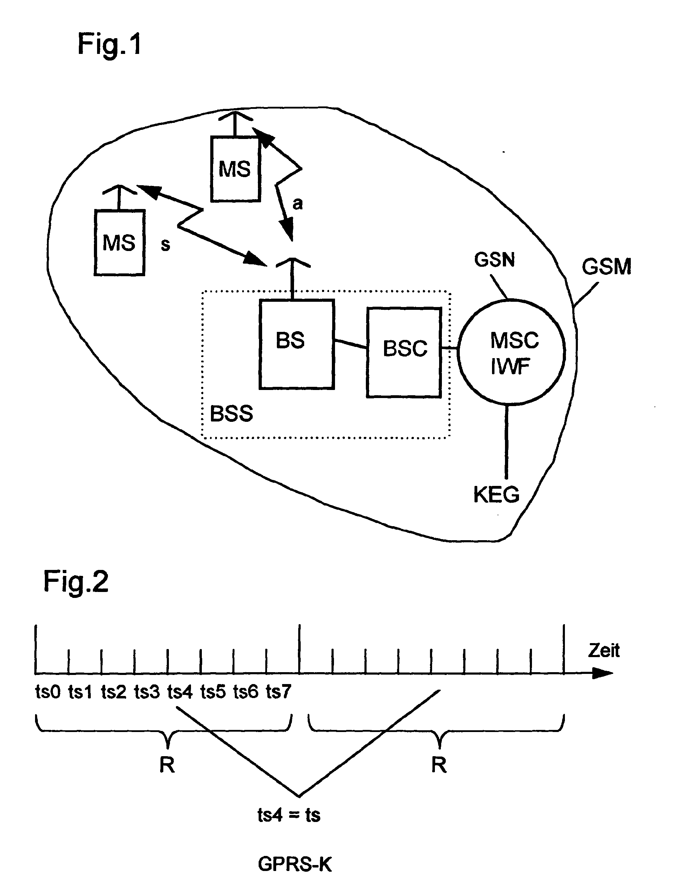

Das Zeitmultiplex-Mobilfunksystem nach FIG 1 ist beispielsweise ein GSM-Mobilfunknetz GSM, das zumindest ein Basisstationssystem BSS mit einem Basisstationscontroller BSC und einer Basisstation BS enthält. Im Funkbereich der einen dargestellten Basisstation BS befinden sich Mobilstationen MS. Das Basisstationssystem BSS stellt die Verbindung zu weiteren Einrichtungen des GSM-Mobilfunknetzes GSM her. Im Basisstationscontroller BSC ist eine Einrichtung implementiert, die eine Zuteilung von funktechnischen Ressourcen für die Mobilstationen MS durchführt. Diese Ressourcenzuteilungseinrichtung kann jedoch auch in anderen Einrichtungen des Mobilfunksystem realisiert werden.

Diese weiteren Einrichtungen sind z.B. eine Mobilvermittlungsstelle MSC und eine Einheit zur Realisierung von Interworking-Funktionen IWF. Das Zusammenwirken von Mobilvermittlungsstelle MSC und Interworking-Funktionen IWF ergibt eine Paketvermittlungsstelle, die auch als GSN (GPRS support node) bezeichnet wird. Diese Paketvermittlungsstelle ist an eine MSC zur Sprachvermittlung angeschlossen, alternativ könnte sie als abgesetzte eigene Einheit realisiert werden.

Das GSM-Mobilfunknetz GSM kann mit weiteren Netzen verbunden sein. Beispielhaft ist ein weiteres Kommunikationsendgerät KEG mit dem GSM-Mobilfunknetz verbindbar oder selbst Bestandteil dieses GSM-Mobilfunknetzes GSM. Das GSM-Mobilfunknetz GSM soll zur Paketdatenübertragung parallel zur bekannten Sprachübertragung genutzt werden. Dabei kann die Einrichtung zur Realisierung von Interworking-Funktionen IWF die Kopplung des GSM-Mobilfunknetzes GSM mit Datenübertragungsnetzen und damit zum weiteren Kommunikationsendgerät KEG herstellen. Ein alternatives Ausführungsbeispiel sieht die Übertragung von ATM-Zellen auf der Funkschnittstelle zwischen Mobilstationen MS und Basisstationen BS vor.

FIG 1 zeigt zwei Verbindungen zwischen einer Basisstation BS und zwei Mobilstationen MS. Die erste Verbindung betrifft Sprachinformationen s, wogegen mit der zweiten Verbindung nicht zeitkritische Daten a übertragen werden. Im weiteren wird nur die erste Verbindung betrachtet. Die nicht zeitkritischen Daten a der zweiten Verbindung werden bei Bedarf während von der ersten Verbindung nicht benötigten Übertragungszeiten übertragen.

Die Funkschnittstelle zwischen den Mobilstationen MS und der Basisstation BS ist durch eine Frequenz und zumindest einen Zeitschlitz ts charakterisiert. Nach FIG 2 werden beispielsweise acht Zeitschlitze ts (ts0 bis ts7) zu einem Rahmen R zusammengefaßt. Der Rahmen R wiederholt sich zyklisch, wobei zu einem Kanal ein wiederkehrender Zeitschlitz, beispielsweise der Zeitschlitz ts = ts4 gehört. Dieser Zeitschlitz ts wird im folgenden als Nachrichtenkanal GPRS-K für die Paketdatenübertragung im Sinne des Dienstes GPRS (General Packet Radio Services) verwendet. Mehrere Zeitmultiplex-Rahmen R können zu einem Makrorahmen zusammengefaßt werden. Bei einer Übertragung von ATM-Zellen muß kein festes Zeitschlitzraster vorliegen.

Soll eine Mobilstation MS diesen Dienst nutzen, dann führt sie entsprechend der GSM-Terminologie einen willkürlichen Zugriff (Random Access) mit einem kurzen, sogenannten access burst durch und wechselt auf einen dedizierten Kontrollkanal. Es folgt eine Authentifikation und das Setzen des Kontextes bezüglich einer logischen Verbindung (standby state). Für eine weitere Paketdatenübertragung in Aufwärtsrichtung wird netzseitig die Vorhaltzeit (Timing Advance) und die Empfangspegel in der Basisstation BS bestimmt.

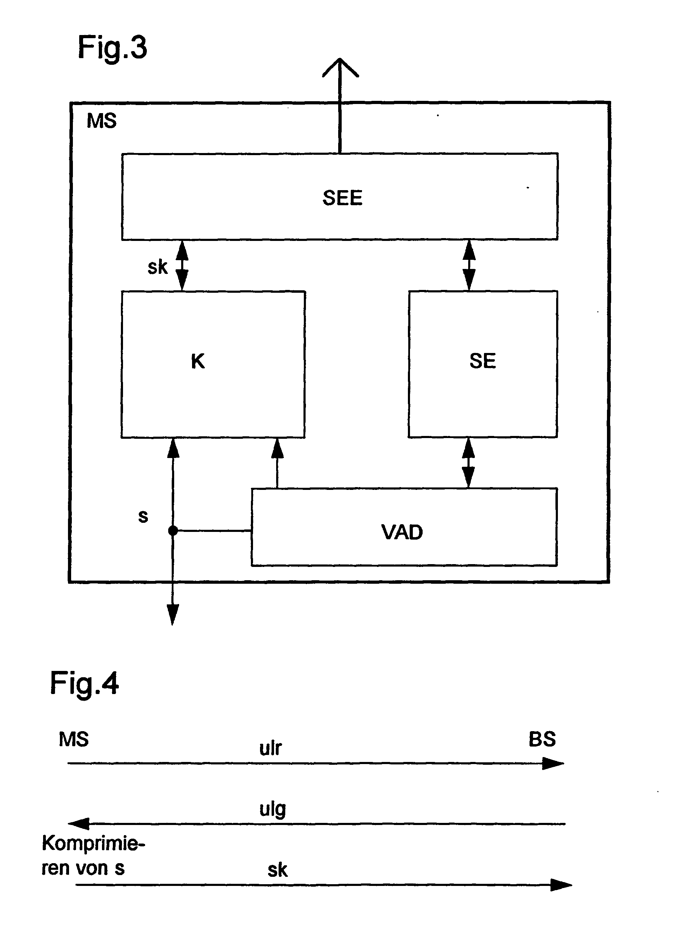

Wird die Paketdatenübertragung auch für Sprachinformationen genutzt, so kann mit einem in FIG 3 gezeigten Sprachaktivitätsdetektor VAD (voice activity detector) detektiert werden, ob momentan sendeseitig Sprachinformation oder eine Sprachpause vorliegt. Liegt gespeicherte Sprachinformation zum Senden vor, dann wird eine Anforderung zur Sendeerlaubnis ulr erzeugt und gesendet.

Bei der in FIG 3 gezeigten Mobilstation MS, die eine Funkstation im Sinne der Erfindung darstellt, wird das Senden durch eine Steuereinrichtung SE ausgelöst. Eine Sende/Empfangseinrichtung SEE sendet die Anforderung zur Sendeerlaubnis ulr in Aufwärtsrichtung an die Basisstation BS.

Netzseitig wird die Anforderung ulr ausgewertet und mit hoher Priorität der ersten Verbindung gemäß FIG 1 funktechnische Ressourcen in Aufwärtsrichtung zugeteilt. Die Zuteilung wird in Form einer Sendeerlaubnis ulg für den Nachrichtenkanal in Abwärtsrichtung signalisiert und durch die Mobilstation MS über die Sende /Empfangseinrichtung SEE empfangen. Dieser Signalisierungsablauf ist auch FIG 4 entnehmbar. Die Erteilung der Sendeerlaubnis ulg kann auch ohne Signalisierung automatisch nach einer festgelegten Zeitdauer bei der sendenden Mobilstation MS als vorliegend angenommen werden. U.U. ist auch das Senden der Anforderung ulr eine funkstationsinterne Funktion.

Nach Erhalt der Sendeerlaubnis ulg und Auswertung durch die Steuereinrichtung SE werden die zu übertragenden Daten, d.h. die Sprachinformationen s, zusätzlich zu weiteren Verarbeitungsschritten, d.h. Sprachkodierung, Kanalkodierung etc., in einer Komprimierungseinrichtung K komprimiert. Dies erfolgt durch Punktierung. Bei der Punktierung werden einzelne Werte der zu übertragenden Sprachinformationen s unterdrückt und im weiteren nicht übertragen. Die komprimierten Daten sk werden anschließend durch die Sende/Empfangseinrichtung SEE gesendet.

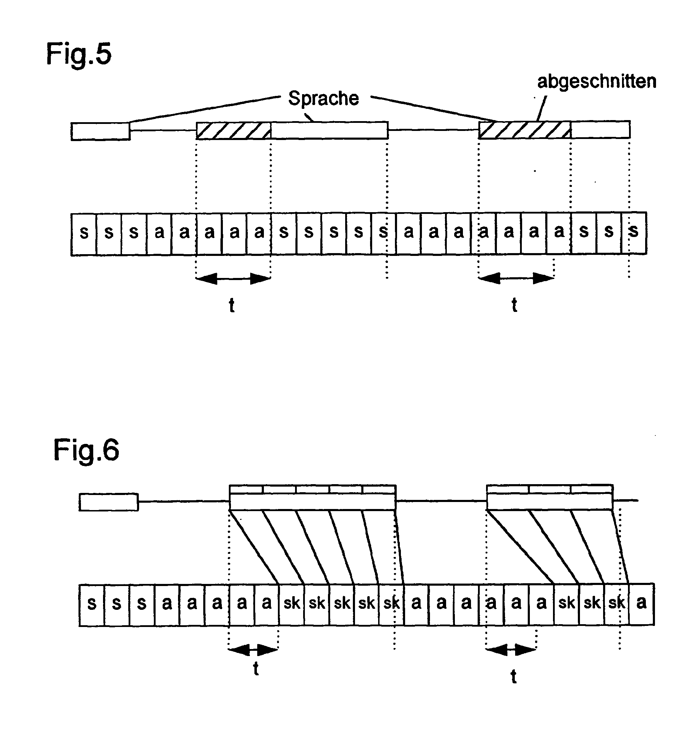

In FIG 5 ist das Problem der Verzögerung des Sendens bei der Nutzung des Nachrichtenkanals durch die erste Verbindung gezeigt. Die Sprachinformationen fallen sendeseitig in Echtzeit, jedoch diskontinuierlich an, wobei Gesprächspausen innerhalb der Sprachinformationen zur Übertragung von Daten a der zweiten Verbindung genutzt werden. Der Zeitpunkt des Endes einer Sprachpause ist jedoch nicht vorhersehbar, so daß eine Verzögerung t zwischen Feststellen des Vorliegens neuer zu übertragender Sprachdaten s und der nächsten Sendemöglichkeit nach Erhalt der Sendeerlaubnis auftritt. Während dieser Zeit t werden weiter die Daten a der zweiten Verbindung gesendet. Die Sprachinformationen können nicht übertragen werden, sie werden abgeschnitten.

Eine erfindungsgemäße Übertragung nach FIG 6 sieht dagegen vor, daß eine Verzögerung t nicht zum Abschneiden führt, sondern durch Komprimierung der Sprachinformationen zu komprimierten Sprachdaten sk kein Abschneiden der zuerst anfallenden Information nötig ist.

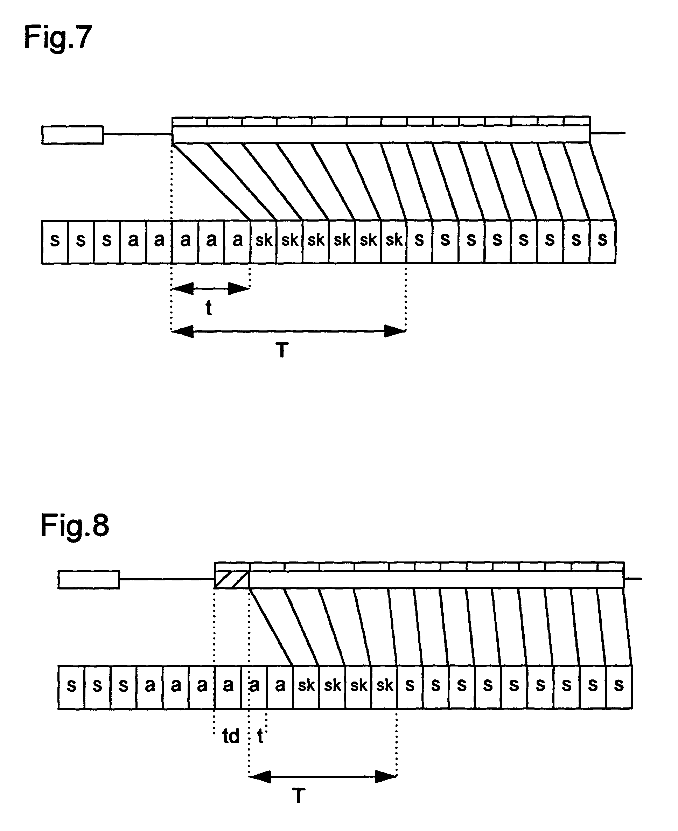

Nach einem weiteren Ausführungsbeispiel der Erfindung wird gemäß FIG 7 während einer Zeit T eine Komprimierung der zu übertragenden Sprachinformationen zu komprimierten Sprachdaten sk durchgeführt und anschließend die Sprachinformationen als Daten s ohne Komprimierung übertragen. Nicht gezeigt ist eine weitere Ausgestaltungsmöglichkeit, die einen schrittweisen Übergang von der komprimierten zur nicht komprimierten Übertragung vorsieht.

Ein drittes Ausführungsbeispiel nach FIG 8 sieht eine Kombination aus Abschneiden und Komprimieren vor. Während einer Zeitdauer td werden die anfallenden Sprachinformationen s nicht übertragen. Anschließend werden komprimierte Sprachindaten sk übertragen.

Liegt beispielsweise für die Paketdatenübertragung eine Verzögerung von 40 ms zwischen Senden der Übertragungsanforderung ulr und Erhalt der Sendeerlaubnis ulg und eine variable Verzögerung von 0 bis 60 ms zwischen Detektion des Vorliegens zu übertragender Daten und der nächsten Möglichkeit des Sendens der Übertragungsanforderung ulr vor, dann kann beispielsweise vorgesehen sein, ständig 70 ms Sprachinformation zu komprimieren und bei Verzögerung von insgesamt mehr als 70 ms den Rest abzuschneiden. Ist die Verzögerung kleiner als 70 ms kann entweder die Komprimierung über den eigentlich notwendigen Rahmen hinweg fortgesetzt werden, der Komprimierungsfaktor k verändert oder teilweise Füllwerte (dummy bits) übertragen werden.

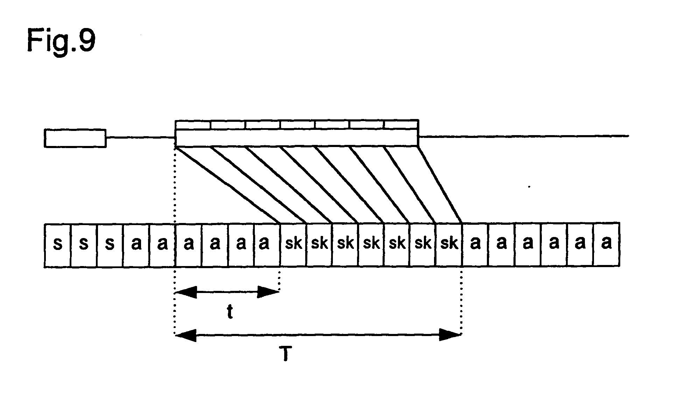

Bei einem vierten Ausführungsbeispiel nach FIG 9 wird die Übertragung der komprimierten Sprachinformationen sk auch nach dem Ende des Anfalls neuer zu übertragender Sprachinformationen fortgesetzt. Das Senden wird erst nach Übertragen der letzten Sprachdaten sk unterbrochen.

Ein Komprimierungsfaktor k kann bei den Ausführungsbeispielen wie folgt definiert werden:

$$k = (T - (t - td))/T.$$

Durch kleine Verzögerungen t, bei langer Komprimierungszeitdauer T und durch das Abschneiden einer Zeitdauer td wird der Komprimierungsfaktor k vergrößert. Der Komprimierungsfaktor k ist sehr groß im Vergleich zu anderen Verfahren und liegt normalerweise im Bereich von 0,7 bis 0,9999.

Der Komprimierungsfaktor k ist durch den Kontext der ersten Verbindung fest eingestellt, so daß die Empfangsseite die Dekomprimierung ohne weitere Signalisierung vornehmen kann. Wird empfangsseitig keine Dekomprimierung durchgeführt, dann kann sendeseitig der Komprimierungsfaktor k auch variabel eingestellt werden. Beispielsweise ist die Zeitdauer T der Komprimierung eine Konstante. Bei variabler Verzögerung t ergeben sich jedoch unterschiedliche Komprimierungsfaktoren k. Der Komprimierungsfaktor k ist ein Systemparameter, der in der Mobilstation MS gespeichert ist.

**Patentansprüche**

1. Verfahren zur Datenübertragung in einem Kommunikationssystem, bei dem
in einem Nachrichtenkanal (GPRS-K) Daten (s, a) von zumindest zwei Verbindungen übertragen werden, wobei für eine erste Verbindung

   - diskontinuierlich zu übertragende Daten anfallen,
   - ein Vorliegen von zu übertragenden Daten detektiert wird,
   - eine Komprimierung von zumindest Teilen der zu übertragenden Daten durchgeführt wird, und
   - nach dem Vorliegen einer Sendeerlaubnis (ulg) die komprimierten Teile der Daten (sk) und anschließend unkomprimierte Daten (s) gesendet werden,

   **dadurch gekennzeichnet, dass**

   - die Komprimierung während einer Konstanten Zeitdauer (T) durchgeführt wird, und
   - ein Komprimierungsfaktor für die Komprimierung der zu übertragenden Daten (s) abhängig von einer Verzögerung (t) zwischen einer Anforderung (ulr) der Sendeerlaubnis und dem Erhalt der Sendeerlaubnis (ulg) eingestellt wird.

2. Verfahren nach Anspruch 1, bei dem sendeseitig

   - eine Anforderung (ulr) zur Sendeerlaubnis gesendet wird, und
   - die Sendeerlaubnis (ulg) durch eine Signalisierung empfangen wird.

3. Verfahren nach Anspruch 1 oder 2, bei dem die zu übertragenden Daten (s) der ersten Verbindung Echtzeitinformationen sind.

4. Verfahren nach Anspruch 3, bei dem

die Echtzeitinformationen Sprachinformationen sind und die Übertragungsanforderung durch einen Sprachaktivitätsdetektor (VAD) festgestellt wird.

5. Verfahren nach einem der vorherigen Ansprüche, bei dem
der Komprimierungsfaktor für die Komprimierung der zu übertragenden Daten über den Zeitraum der Komprimierung verändert wird.

6. Verfahren nach einem der vorherigen Ansprüche, bei dem ein Teil der zu übertragenden Daten (s) nicht übertragen wird.

7. Verfahren nach einem der vorherigen Ansprüche, bei dem der Komprimierungsfaktor für die Komprimierung der zu übertragenden Daten (s) und/oder ein Anteil nicht übertragener Daten adaptiv eingestellt wird.

8. Verfahren nach einem der vorherigen Ansprüche, bei dem
das Senden auch nach Beendigung des sendeseitigen Anfalls der zu übertragenden Daten (s) fortgesetzt wird.

9. Verfahren nach einem der vorherigen Ansprüche, bei dem Vereinbarungen über den Komprimierungsfaktor für die Komprimierung der zu übertragenden Daten (s) als Systemparameter (T, t, td) vor einem Verbindungsaufbau festgelegt werden.

10. Verfahren nach einem der vorherigen Ansprüche, bei dem als Komprimierung sendeseitig eine Punktierung durchgeführt wird.

11. Funkstation (MS) zur Datenübertragung in einem Kommunikationssystem, bei dem in einem Nachrichtenkanal (GPRS-K) Daten (s, a) von zumindest zwei Verbindungen übertragen werden, mit einer Sende/Empfangseinrichtung (SEE) zur Datenübertragung für eine erste Verbindung mit diskontinuierlich anfallenden Daten,
mit einem Detektor (VAD) zum Feststellen eines Vorliegens von zu übertragenden Daten,
mit einer Steuereinrichtung (SE) zum Steuern einer Komprimierungseinrichtung (K) zum Komprimieren der zu übertragenden Daten, während einer Konstanten Zeitdauer (T), wobei die Daten nach Vorliegen einer Sendeerlaubnis (ulg) durch die Sende/Empfangseinrichtung (SEE) gesendet werden, und wobei ein Komprimierungsfaktor für die Komprimierung der zu übertragenden Daten (s) abhängig von einer Verzögerung (t) zwischen einer Anforderung (ulr) der Sendeerlaubnis und dem Erhalt der Sendeerlaubnis (ulg) eingestellt wird.

12. Funkstation (MS) nach Anspruch 11,

die als Mobilstation (MS) eines Funk-Kommunikationssystems ausgebildet ist.

**Claims**

1. Method for data transmission in a communication system, in which
in a message channel (GPRS-K) data (s, a) of at least two connections is transmitted, with for a first connection

    - data to be transmitted discontinuously occurring,
    - a presence of data to be transmitted is detected,
    - a compression of at least parts of the data to be transmitted is performed, and
    - after an uplink grant (ulg) is available, the compressed parts of the data (sk) and subsequently uncompressed data (s) are sent,

    **characterized in that**

    - the compression is performed for a constant time (T)
    - a compression factor is set for the compression of the data to be transmitted (s) depending on a delay (t) between an uplink request (ulr) and the receipt of the uplink grant (ulg).

2. Method in accordance with claim 1, in which on the send side

    - an uplink request (ulr) is transmitted, and
    - the uplink grant (ulg) is received by signalling.

3. Method in accordance with claim 1 or 2, in which the data (s) of the first connection to be transmitted is real time data.

4. Method in accordance with claim 3, in which the real time information is speech information and the uplink request is established by a Voice Activity Detector (VAD).

5. Method in accordance with one of the previous claims, in which the compression factor for the compression of the data to be transmitted changes over the period of the compression.

6. Method in accordance with one of the previous claims, in which a part of the data to be transmitted (s) is not transmitted.

7. Method in accordance with one of the previous claims, in which the compression factor for the compression of the data to be transmitted (s) and/or a part of the non-transmitted data are set adaptively.

8. Method in accordance with one of the previous claims, in which
the transmission is continued even after the ending of the send side occurrence of the data to be transmitted (s).

9. Method in accordance with one of the previous claims, in which agreements about the compression factor for the compression of the data to be transmitted (s) as system parameters (T, t, td) before a connection setup.

10. Method in accordance with one of the previous claims, in which as a puncturing is executed on the send side.

11. Radio station (MS) for data transmission in a communication system, in which in a message channel (GPRS-K) data (s, a) of at least two connection is transmitted with a transceiver (SEE) for data transmission for a first connection with discontinuously occurring data,
with a detector (VAD) for determining presence of data to be transmitted,
with a control device (SE) for controlling a compression device (K) for compressing the data to be transmitted for a constant time (T), with the data being sent after an upload grant (ulg) is available by a transceiver apparatus (SEE) and
with a compression factor for compressing the data (s) to be transferred depending on a delay (t) between an upload request (ulr) and the receipt of an upload grant (ulg).

12. Radio station (MS) in accordance with claim 11, which is embodied as the mobile station (MS) of a radio communication system.

**Revendications**

1. Procédé pour la transmission de données dans un système de communication dans lequel
des données (s, a) d'au moins deux connexions sont transmises sur un canal de transmission (GPRS-K), et pour une première connexion

- des données à transmettre de manière discontinue sont produites,
- une présence de données à transmettre est détectée,
- une compression d'au moins de portions des données à transmettre est effectuée, et
- après la réception d'une autorisation d'émission (ulg), les portions comprimées des données (sk) et ensuite des données non comprimées (s) sont émises,

**caractérisé en ce que**

- on effectue la compression pendant un temps constant (T) et
- on règle un facteur de compression pour la compression des données à transmettre (s) en fonction d'une temporisation (t) entre une requête (ulr) de l'autorisation d'émission et la réception de l'autorisation d'émission (ulg).

2. Procédé selon la revendication 1, dans lequel côté émission,

- une requête (ulr) de l'autorisation d'émission est émise et
- l'autorisation d'émission (ulg) est reçue par une signalisation.

3. Procédé selon la revendication 1 ou 2, dans lequel les données à transmettre (s) de la première connexion sont des informations en temps réel.

4. Procédé selon la revendication 3, dans lequel les informations en temps réel sont des informations vocales et la requête de transmission est constatée par un détecteur d'activité vocale (VAD).

5. Procédé selon l'une des revendications précédentes, dans lequel
on modifie le facteur de compression pour la compression des données à transmettre pendant la période de la compression.

6. Procédé selon l'une des revendications précédentes, dans lequel
une portion des données à transmettre (s) n'est pas transmise.

7. Procédé selon l'une des revendications précédentes, dans lequel
on règle de manière adaptative le facteur de compression pour la compression des données à transmettre (s) et/ou une fraction de données non transmises.

8. Procédé selon l'une des revendications précédentes, dans lequel
on poursuit l'émission même au terme de la production, côté émission, des données à transmettre (s).

9. Procédé selon l'une des revendications précédentes, dans lequel
on définit des accords sur le facteur de compression pour la compression des données à transmettre (s) comme paramètres de système (T, t, td) avant l'établissement d'une connexion.

**10.** Procédé selon l'une des revendications précédentes, dans lequel on effectue comme compression, côté émission, une ponctuation.

**11.** Station radio (MS) pour la transmission de données dans un système de communication dans lequel des données (s, a) d'au moins deux connexions sont transmises sur un canal de transmission (GPRS-K), avec un dispositif d'émission/réception (SEE) destiné à la transmission de données pour une première connexion avec des données produites de manière discontinue,
avec un détecteur (VAD) destiné à constater une présence de données à transmettre,
avec un dispositif de commande (SE) destiné à commander un dispositif de compression (K) pour comprimer les données à transmettre pendant un temps constant (T), lesdites données, après réception d'une autorisation d'émission (ulg), étant émises par le dispositif d'émission/réception (SEE) et un facteur de compression pour la compression des données à transmettre (s) étant réglé en fonction d'une temporisation (t) entre une requête (ulr) de l'autorisation d'émission et la réception de l'autorisation d'émission (ulg).

**12.** Station radio (MS) selon la revendication 11, réalisée comme station mobile (MS) d'un système de communication radio.

## Fig.1

## Fig.2

GPRS-K

# Fig.3

# Fig.4

# Fig.5

Sprache

abgeschnitten

| s | s | s | a | a | a | a | a | s | s | s | s | s | a | a | a | a | a | a | s | s | s |
|---|---|---|---|---|---|---|---|---|---|---|---|---|---|---|---|---|---|---|---|---|---|

t          t

# Fig.6

| s | s | s | a | a | a | a | a | sk | sk | sk | sk | sk | a | a | a | a | a | a | sk | sk | sk | a |
|---|---|---|---|---|---|---|---|----|----|----|----|----|---|---|---|---|---|---|----|----|----|---|

t          t

# Fig.7

# Fig.8

# Fig.9